# EUROPEAN PATENT SPECIFICATION

(11) **EP 1 149 501 B1**
(45) Date of publication and mention of the grant of the patent: **15.02.2006**
(21) Application number: 00991661.0
(22) Date of filing: 08.11.2000
(51) Int. Cl.: H04Q 7/28, H04J 3/02

(54) **METHOD OF RESOLVING COLLISIONS IN DIRECT MODE OPERATION**
VERFAHREN ZUM AUFLÖSEN VON KOLLISIONEN IN DIREKT-MODUS-BETRIEB
PROCEDE PERMETTANT DE RESOUDRE LE PROBLEME DES COLLISIONS DANS UN FONCTIONNEMENT EN MODE DIRECT

(30) Priority: 08.11.1999 GB 9926322
(43) Date of publication of application: 31.10.2001
(73) Proprietor: MOTOROLA ISRAEL LIMITED, Tel Aviv 67899 (IL)
(72) Inventor: CARMON, Rafael, 58492 Holon (IL)
(74) Representative: McCormack, Derek James
(86) International application number: PCT/IB2000/002062
(87) International publication number: WO 2001/037580

(56) References cited:
- WO-A-91/09481
- WO-A-95/26613
- US-A- 4 740 992
- US-A- 4 751 701
- JULIO SEGUEL ET AL: "Voice-Data Hybrid Transmission Systems in 64kbit/sec Digital Lines" TRANSACTIONS OF THE INSTITUTE OF ELECTRONICS AND COMMUNICATION ENGINEERS OF JAPAN, SECTION E,JP,INST. OF ELECTRONICS & COMMUNIC. ENGINEERS OF JAPAN. TOKYO, vol. E-68, no. 1, 1985, pages 22-28, XP002090316

## Description

### FIELD OF THE INVENTION

The present invention relates to radio communications and, more particularly, to a method for resolving collisions between several two-way radio units trying to transmit on the same channel.

### BACKGROUND OF THE INVENTION

Systems of two-way radio units may use one of two different modes of operation for managing communication among the units. In trunked mode operation (TMO), the communication is managed by one or more base stations. The units communicate with each other only via the base stations. In direct mode operation (DMO), the units communicate directly with each other on a common channel.

For clear communication in DMO, only one unit may transmit on the common channel at any one time. If two or more units try to transmit simultaneously, the transmissions interfere with each other, a situation that is called a "collision". Therefore, each unit monitors the channel before transmitting, and transmits only if the channel is clear, *i.e*., if no other unit is transmitting. This monitoring usually is effected by means of periodic received signal strength indication (RSSI) measurements or by similar signal quality estimator measurements.

Two units, having monitored the common channel and having determined that the common channel is clear, may nevertheless start transmitting simultaneously, thereby producing a collision. For units that are capable of transmitting and receiving simultaneously, standards such as the Aloha standard and the Slotted Aloha standard provide protocols for resolving such collisions. Basically, if a unit receives any signal that is different from the signal that that unit is transmitting, that unit stops transmitting. These protocols are not usable by systems of low-cost two-way radio units that are not capable of simultaneous transmission and reception.

Furthermore, two mobile units may determine the common channel to be clear, and then start transmitting, because the two units are out of range of each other. If the two units subsequently move within range of each other, a collision arises without being recognized as such.

There is thus a widely recognized need for, and it would be highly advantageous to have, a method of resolving collisions in a communication system based on two-way radio units that do not transmit and receive simultaneously and operate in a direct mode of operation.

US-A-4,751,701 describes a method of collision detection in a TDM system. The paper 'Voice-Data Hybrid Transmission Systems in 64 bit/sec Digital Lines' by J Seguel et al published in 2334 the Transactions of the IECE of Japan, Vol. E-68, (1985) Jan,, No. 1, Tokyo, Japan, describes transmission of voice and data information by the same communication system. Neither of these references is concerned with a communication system based on two-way radio units that do not transmit and receive simultaneously and operate in a direct mode of operation.

### SUMMARY OF THE INVENTION

According to the present invention there is provided a method for communication among a plurality of users, comprising the steps of:
(a) providing each user with a transceiver, all said transceivers being operative to transmit and receive on a common channel; and
(b) for each of the transceivers of which the user wishes to transmit
   (i) monitoring said common channel for a transmission by any other transceiver, and
   (ii) if a transmission by another transceiver is detected, reversibly disabling said each transceiver;
   wherein
(c) the communication is radio communication in a direct mode between transceivers which are half duplex two-way radio transceivers; and
(d) each of said transceivers of which the user has begun to transmit speech applies the steps of:
   (i) detecting a pause in speech by its user;
   (ii) during said pause, monitoring said common channel; and
   (iii) if a transmission by another transceiver is detected ending the transmission and if a transmission by another transceiver is not detected, maintaining transmission of speech by said at least one transmitting transceiver.

Communications systems that are based on half-duplex two-way radio units, that do not transmit and receive simultaneously, typically alternate between time slots used collectively for transmission and time slots used collectively for reception. The duration of these time slots typically is from several hundreds of microseconds to several tens of milliseconds. For example, under the TETRA standard, the slot duration is 14.1 milliseconds. The present invention is directed at collision resolution in systems for speech communication, and is based on the fact that ordinary speech includes many pauses on the time scale of a transmission/reception time slot. During a pause, a unit that is attempting to transmit monitors the common channel. If that unit detects a transmission by another unit during the pause, then the pausing unit stops transmitting.

### BRIEF DESCRIPTION OF THE DRAWINGS

The invention is herein described, by way of example only, with reference to the accompanying drawings, wherein:
FIG. 1 is an illustration of how the present invention resolves a collision of two transceiver units that start transmitting simultaneously;
FIG. 2 is an illustration of how the present invention resolves a collision of two transceiver units that start transmitting sequentially.

### DESCRIPTION OF THE PREFERRED EMBODIMENTS

The present invention is of a method of resolving collisions in a communication system in which several transceivers share a common communication channel. Specifically, the present invention can be used to resolve collisions in a system of two-way radios that do not transmit and receive simultaneously.

The principles and operation of collision resolution according to the present invention may be better understood with reference to the drawings and the accompanying description.

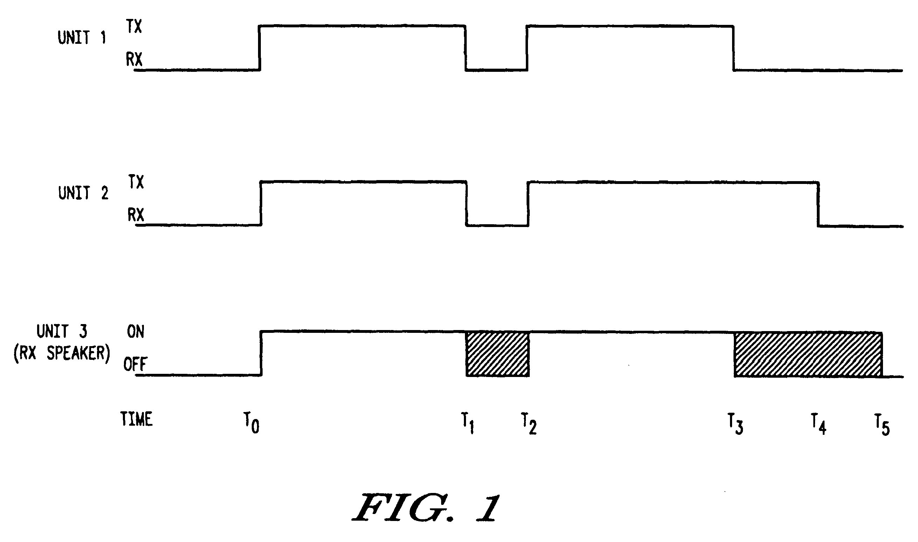

Referring now to the drawings, Figure 1 shows the activities of three transceiver units, for example two-way radio units, as functions of time, illustrating several features of the operation of the present invention. At time **T**_{**0**}, unit **1,** having monitored (**RX**) the common channel and found the common channel to be clear, attempts to transmit (**TX**) to unit **3.** At the same time, unit **2,** having monitored (**RX**) the common channel and found it to be clear, attempts to transmit (**TX**) to a fourth unit (not shown). Thus, starting at time T₀, there is a collision between the transmissions of unit **1** and the transmissions of unit **2.**

The transmissions are in the form of digital packets that include digitized compressed representations of the speech of the users of units **1** and **2,** and also address information identifying the intended recipients of the packets. For example, the packets transmitted by unit **1** identify unit **3** as the intended recipient. It is assumed for illustrational purposes in Figure 1 that the signal received by unit **3** from unit **1** is sufficiently stronger than the signal received by unit **3** from unit **2,** for example because unit **3** is significantly closer to unit **1** than to unit **2,** that unit **3** can recognize the packets transmitted by unit **1** despite the interference from unit **2,** although in general this is not the case. The speaker of unit **3** initially is **OFF,** but upon receiving and recognizing packets transmitted by unit **1,** unit **3** turns its speaker **ON** and translates the packets into audible speech that is rendered to the user of unit **3** on the speaker of unit **3.**

At time **T**_{**1**}, the users of both units **1** and **2** pause in their speech. Both units **1** and **2** detect these pauses, using a standard technique such as Voice Activity Detection (VAD). During the pauses, from time **T**_{**1**} to time **T**_{**2**}**,** both units **1** and **2** stop transmitting and instead monitor the common channel. Because neither unit **1** nor unit **2** transmits from **T**_{**1**} until the time **T**_{**2**} at which the users of units **1** and **2** both resume speaking, both unit **1** and unit **2** determine the common channel to be clear, and both unit **1** and unit **2** resume transmitting at time **T**_{**2**}**.** Typically the duration of the time interval (T₂-T₁) during which a transmitting unit pauses to monitor the common channel is between **2** reception slots' duration and several seconds. Thus, under the TETRA standard, in which the alternating transmission and reception slots have durations of 14.5 milliseconds, the duration of the pause is between 110 milliseconds and 4 seconds.

Conventionally, a transceiver unit, that stops receiving transmissions from another transceiver unit, waits a predetermined time interval ("inactivity time") for resumption of transmissions from the other unit. If the transmissions do not resume during this time interval, the receiving transceiver unit assumes that the transmissions are over, and acts accordingly. For example, the receiving transceiver unit turns off its speaker, and the receiving transceiver unit may resume monitoring the common channel for the purpose of initiating its own transmission. To indicate to unit **3** that the pause at time **T**_{**1**} is not a true cessation of transmission, at the start of the pause, unit **1** transmits to unit **3** a pause message to that effect. Unit **3** then waits a longer time than the standard inactivity time before concluding that the transmissions from unit **1** are over. A typical value of the inactivity time is 0.5 seconds. An illustrative value of the time that unit **3** waits for resumed transmission from unit **1** after receiving a pause message is 2.0 seconds.

Preferably, during the pause from time **T**_{**1**} to time **T**_{**2**}**,** the speaker of unit **3** renders "comfort noise", represented in Figure 1 by cross-hatching, to reassure the user of unit **3** that unit **3** is still operating, and the pause is merely a temporary cessation of transmission from unit **1.** Preferably, the pause message includes values of parameters that describe the background noise level at unit **1,** so that unit **3** can generate comfort noise that corresponds to that background noise level.

As noted above, at time **T**_{**2**}**,** both units **1** and **2** resume transmission. Unit **3,** upon detecting the resumption of transmission from unit **1,** resumes translating the packets transmitted by unit **1** into audible speech and rendering this speech to the user of unit **3** on the speaker of unit **3.** The speech of the user of unit **1** pauses at time **T**_{**3**}**,** but the speech of the user of unit **2** does not pause until a later time **T**_{**4**}**.** At time **T**_{**3**}**,** unit **1** stops transmitting and starts monitoring the common channel. Because unit **2** continues to transmit, unit **1** detects transmission on the common channel, unit **1** now disables itself temporarily from transmitting, and renders a busy signal on its speaker to indicate to the user of unit **1** that the common channel is in use by another transceiver unit. Unit **3**, upon detecting the cessation of transmission from unit **1** at time **T**_{**3**}**,** again renders comfort noise on its speaker until the maximum pause time is reached at time **T**_{**4**}. Unit **3** then turns its speaker **OFF**.

Figure 1 illustrates the stochastic nature of the present invention. The method of the present invention recognizes a collision only when one of the competing transceiver units pauses. So, in the example illustrated in Figure 1, the collision between units **1** and **2** is not recognized until time **T**_{**3**}**,** because units **1** and **2** pause simultaneously at time **T**_{**1**} and resume transmitting simultaneously at time **T**_{**2**}**.** Once a collision starts, whichever transceiver unit pauses first is denied use of the common channel, and the transceiver unit that pauses last obtains exclusive use of the common channel.

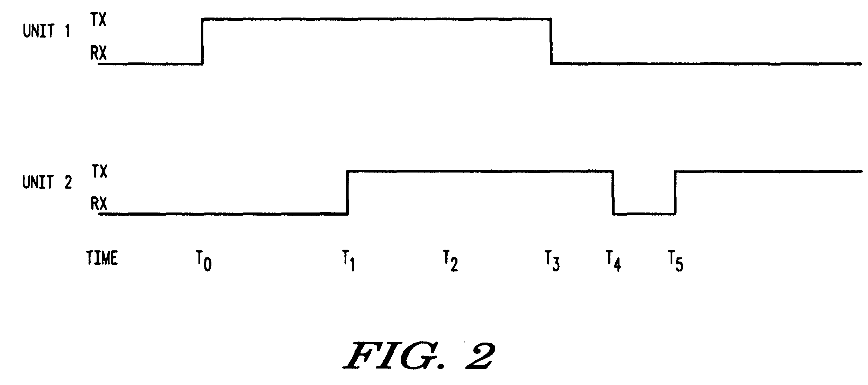

Figure 2 illustrates the ability of the present invention to resolve collisions that arise despite the monitoring of the common channel by the transceiver units. At time **T**_{**0**}**,** unit **1,** having monitored the common channel and having determined that the common channel is clear, starts transmitting. Meanwhile, unit **2** also is monitoring the common channel. Unit **2** fails to detect the transmissions of unit **1.** This can occur, for example, if unit **2** is shielded from unit **1,** or if unit **2** is too far from unit **1** to detect the transmissions of unit **1.** Consequently, unit **2** starts transmitting at time **T**_{**1**}, initiating a collision, at least with respect to other transceiver units that are capable of receiving transmissions from both unit **1** and unit **2.** At time **T**_{**2**}**,** unit **2** moves to a position where units **1** and **2** are capable of receiving each other's transmissions. The speech of the user of unit **1** pauses at time **T**_{**3**}**,** and the speech of the user of unit **2** pauses at a later time **T**_{**4**}. Having paused at time **T**_{**3**}**,** unit **1** detects the transmissions of unit **2** and disables itself temporarily. Unit **2,** having paused at later time **T**_{**2**}, detects a clear common channel and resumes transmitting at time **T**_{**5**}.

While the invention has been described with respect to a limited number of embodiments, it will be appreciated that many variations, modifications and other applications of the invention may be made within the scope of the appended claims.

## Claims

1. A method for communication among a plurality of users, comprising the steps of:
(a) providing each user with a transceiver, all said transceivers being operative to transmit and receive on a common channel; and
(b) for each of the transceivers of which the user wishes to transmit
(i) monitoring said common channel for a transmission by any other transceiver, and
(ii) if a transmission by another transceiver is detected, reversibly disabling said each transceiver;
**characterized in that**
(c) the communication is radio communication in a direct mode between transceivers which are half duplex two-way radio transceivers; and
(d) each of said transceivers of which the user has begun to transmit speech applies the steps of:
(i) detecting a pause in speech by its user;
(ii) during said pause, monitoring said common channel; and
(iii) if a transmission by another transceiver is detected ending the transmission and if a transmission by another transceiver is not detected, maintaining transmission of speech by said at least one transmitting transceiver.

2. The method of claim 1 wherein the monitoring of said common channel is carried out during multiple pauses in speech of the user and the transmission of speech by the transceiver continues until a transmission by another transceiver is detected on the channel and, when such a transmission is detected, the transmitting transceiver is reversibly disabled.

3. The method of claim 1 or claim 2, wherein said reversible disabling of the transceiver includes generating a busy signal.

4. The method of any one preceding claim, further comprising the step of: during a pause, transmitting a pause message prior to said monitoring.

5. The method of claim 4, wherein said pause message includes an indication of a noise level at the transceiver.

6. The method of claim 1, wherein said detecting of said pause is effected using Voice Activity Detection.

7. The method according to any one preceding claim wherein the communications between the transceivers are according to the TETRA standard.

## Patentansprüche

1. Verfahren zur Kommunikation zwischen einer Mehrzahl von Benutzern, umfassend die Schritte:
(a) Bereitstellen eines Sende-/Empfangsgerätes für jeden Benutzer, wobei alle Sende-/Empfangsgeräte wirksam sind, auf einem gemeinsamen Kanal zu senden und zu empfangen; und
(b) für jedes der Sende-/Empfangsgeräte, dessen Benutzer senden möchte:
(i) Überwachen des gemeinsamen Kanals bezüglich einer Sendung durch irgendein anderes Sende-/Empfangsgerät und
(ii) reversibles Deaktivieren des Sende-/Empfangsgerätes, falls eine Sendung durch ein anderes Sende-/Empfangsgerät erkannt wird
**dadurch gekennzeichnet, dass**
(c) die Kommunikation eine Funkkommunikation in einem Direktmodus zwischen Sende-/Empfangsgeräten ist, die Halbduplex-Zweiwege-Funksende-/Empfangsgeräte sind; und
(d) jedes der Sende-/Empfangsgeräte, dessen Benutzer begonnen hat, Sprache zu senden, die folgenden Schritte anwendet:
(i) Erkennen einer Pause in der Sprache seines Benutzers;
(ii) Überwachen des gemeinsamen Kanals während der Pause; und
(iii)Beenden der Sendung, falls eine Sendung eines anderen Sende-/Empfangsgeräts erkannt wird, und Beibehalten der Sprachsendung durch das wenigstens eine sendende Sende-/Empfangsgerät, falls keine Sendung eines anderen Sende-/Empfangsgeräts erkannt wird.

2. Verfahren nach Anspruch 1, wobei das Überwachen des gemeinsamen Kanals während mehrerer Sprachpausen des Benutzers ausgeführt wird und die Sendung der Sprache durch das Sende-/Empfangsgerät fortgesetzt wird, bis eine Sendung eines anderen Sende-/Empfangsgerätes auf dem Kanal erkannt wird und das sendende Sende-/Empfangsgerät reversibel deaktiviert wird, wenn eine solche Sendung erkannt wird.

3. Verfahren nach Anspruch 1 oder Anspruch 2, wobei das reversible Deaktivieren des Sende-/Empfangsgerätes das Erzeugen eines Besetzt-Signals umfasst.

4. Verfahren nach einem der vorangehenden Ansprüche, weiter umfassend den Schritt: Senden, während einer Pause, einer Pausenmitteilung vor dem Überwachen.

5. Verfahren nach Anspruch 4, wobei die Pausenmitteilung einen Hinweis auf einen Rauschpegel bei dem Sende-/Empfangsgerät enthält.

6. Verfahren nach Anspruch 1, wobei das Erkennen der Pause unter Verwendung von Voice Activity Detection (Sprachaktivitätserkennung) durchgeführt wird.

7. Verfahren gemäß einem der vorangehenden Ansprüche, wobei die Kommunikationen zwischen den Sende-/Empfangsgeräten dem TETRA-Standard entsprechen.

## Revendications

1. Procédé permettant la communication entre plusieurs utilisateurs, comprenant les étapes consistant à :
(a) fournir à chaque utilisateur un émetteur-récepteur, tous lesdits émetteurs-récepteurs étant opérationnels pour émettre et recevoir sur un canal commun ; et
(b) pour chaque émetteur-récepteur avec lequel l'utilisateur souhaite émettre
(i) surveiller ledit canal commun pour une émission effectuée par tout autre émetteur-récepteur, et
(ii) si une émission effectuée par un autre émetteur-récepteur est détectée, désactiver de façon réversible chaque dit émetteur-récepteur ;
**caractérisé en ce que**
(c) la communication est la radiocommunication en mode direct entre des émetteurs-récepteurs qui sont des émetteurs-récepteurs de radio bidirectionnelle en semi-duplex ; et
(d) chaque dit émetteur-récepteur avec lequel l'utilisateur a commencé à émettre une parole applique les étapes consistant à :
(i) détecter une pause dans la parole par son utilisateur ;
(ii) surveiller ledit canal commun pendant ladite pause ; et
(iii) terminer l'émission si une émission effectuée par un autre émetteur-récepteur est détectée et maintenir l'émission de la parole par ledit au moins un émetteur-récepteur d'émission si une émission effectuée par un autre émetteur-récepteur n'est pas détectée.

2. Procédé selon la revendication 1, dans lequel la surveillance dudit canal commun est réalisée pendant des pauses multiples dans la parole de l'utilisateur et l'émission de la parole par l'émetteur-récepteur continue jusqu'à ce qu'une émission effectuée par un autre émetteur-récepteur soit détectée sur le canal et, quand une telle émission est détectée, l'émetteur-récepteur d'émission est désactivé de façon réversible.

3. Procédé selon la revendication 1 ou 2, dans lequel ladite désactivation réversible de l'émetteur-récepteur comprend la génération d'un signal d'occupation.

4. Procédé selon l'une quelconque des revendications précédentes, comprenant en outre l'étape consistant, pendant la pause, à transmettre un message de pause avant ladite surveillance.

5. Procédé selon la revendication 4, dans lequel ledit message de pause comprend une indication d'un niveau de bruit au niveau de l'émetteur-récepteur.

6. Procédé selon la revendication 1, dans lequel ladite détection de ladite pause est effectuée en utilisant la détection d'activité de parole.

7. Procédé selon l'une quelconque des revendications précédentes, dans lequel les communications entre les émetteurs-récepteurs sont effectuées selon la norme TETRA.
